Europäisches Patentamt

European Patent Office

Office européen des brevets

(19)

(11) Publication number: **0 060 398**
**B1**

## (12) EUROPEAN PATENT SPECIFICATION

(45) Date of publication of patent specification: **08.08.84**

(51) Int. Cl.³: **G 03 B 27/52**

(21) Application number: **82101177.2**

(22) Date of filing: **17.02.82**

(54) Image recording device for recording an image of a document on to a photosensitive surface.

(30) Priority: **16.03.81 US 244458**

(43) Date of publication of application:
**22.09.82 Bulletin 82/38**

(45) Publication of the grant of the patent:
**08.08.84 Bulletin 84/32**

(84) Designated Contracting States:
**DE FR GB**

(56) References cited:
**US - A - 4 087 173**

(73) Proprietor: **International Business Machines Corporation**
**Old Orchard Road**
**Armonk, N.Y. 10504 (US)**

(72) Inventor: **Howard, Thomas William**
**8060 Craighead Road**
**Harrisburg North Carolina 28075 (US)**

(74) Representative: **Hawkins, Anthony George Frederick**
**IBM United Kingdom Patent Operations Hursley Park**
**Winchester, Hants, S021 2JN (GB)**

Courier Press, Leamington Spa. England.

## Description

The present invention relates to an image recording device for recording an image of a document on to a photosensitive surface.

One example of such a device is a microfilm recorder for recording documents, such as bank cheques, on to a micro-film. In earlier machines of this type, recording was performed with both the document and film stationary. However in order to achieve higher speeds systems have been devised in which either the document and film move during recording or the lens together with either the document or the film so move. It is to the latter of these systems that the present invention is directed. A major problem with such systems is that vibration from the drive devices is transmitted to the lens, thereby reducing image resolution. In addition, if a servo lens drive system is employed, extraneous motion of the lens mount can be a source of servo instability.

U.S. Patent Specification No. 4087173 shows an arrangement for movably mounting a lens in a document recording system. The lens is mounted in a unit which is supported at each end by a flexible arm. Each of these arms flexes in the direction of lens movement but is rigid in the lens axis direction. In that system, machine vibrations can be transmitted to the flexible arms causing vibration of the lens.

It is an object of the present invention to minimise the transmission of vibrations to the lens. This is achieved by employing a parallelogram system which includes rigid arms coupled together by a novel spring hinge arrangement.

Accordingly, the present invention provides an image recording device for recording an image of a document on to a photosensitive surface during relative movement between the document and surface, wherein the image is projected on to the surface by a lens moving in proportional synchronism with said relative movement, said lens being coupled to a stationary frame member of the device by a parallelogram linkage system and to drive means to effect its movement along a path determined by the linkage system, characterised in that said linkage system comprises a rigid shuttle member carrying the lens and hinged at its ends to a pair of rigid side members hinged to said frame member, each hinge between two of the members comprising a first spring leaf affixed to an end surface of the first member and to an inwardly facing surface of the second member and a second spring leaf normal to the first leaf and affixed to an end surface of the second member and an inwardly facing surface of the first member.

The invention will now be described, by way of example, with reference to the accompanying drawings, in which:

Fig. 1 shows a microfilm camera having a lens support shuttle; and

Fig. 2 is a perspective detailed view of the lens support shuttle shown in Fig. 1.

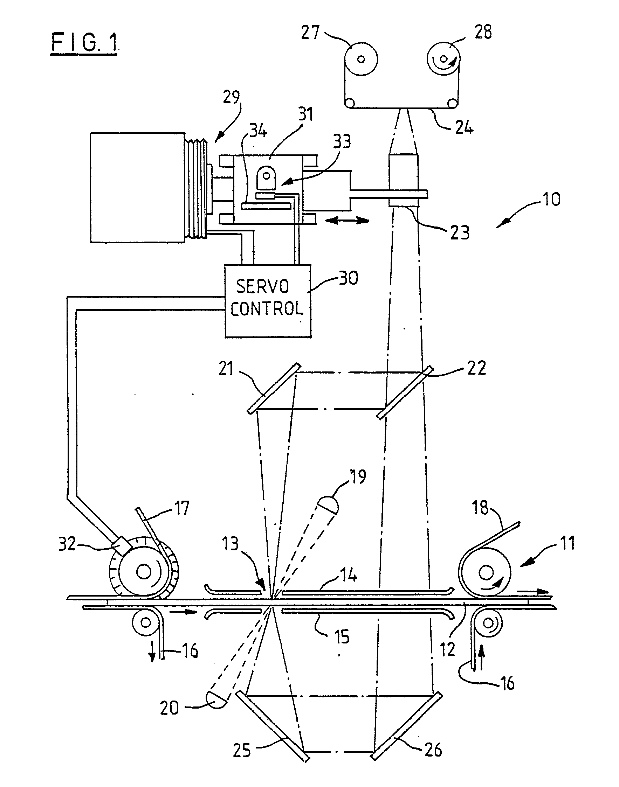

In Fig. 1 there is shown a microfilm camera 10, including a drive belt mechanism 11 which feeds documents 12 past an exposure slit aperture 13 in a pair of guide plates 14 and 15. The drive mechanism 11 consists of a lower belt 16, a feed belt 17 and a delivery belt 18.

A pair of lamps 19 and 20 illuminate the aperture 13 to enable the projection of a slit image of a transverse portion of a document 12 as it passes the aperture 13. Mirrors 21 and 22 reflect the slit image from the top surface of a document 12 to a lens 23 for focussing on to the photosensitive surface of photographic film 24. Similarly, mirrors 25 and 26 project a slit image of the underside of document 12 to lens 23 for projection on to an adjacent portion of film 24. For ease of understanding, film 24 has been shown, together with a supply spool 27 and takeup spool 28 oriented to align film 24 with the path of document 12; however, it is preferred to have the film 24 rotated 90° from the position shown such that the images of the documents 12 are oriented with their long dimensions transverse to the film 24 as is shown, for example, in U.S. Patent 3,885,871.

Mirrors 25 and 26 form an offset optical path that avoids interference with the path of documents 12 and mirrors 21 and 22.

Lens 23 is moved in the direction of the motion of documents 12 at a speed that is proportional to the lens magnification ratio whereby the slit reflection projected from aperture 13 traverses stationary film 24 in synchronism with the movement of documents 12. The document image itself remains stationary with respect to film 24 to provide a high-resolution photographic exposure. The required scanning motion is produced by a closed loop servo mechanism including a voice coil motor 29 controlled by a servo control circuit 30 and connected to a lens support shuttle 31. The servo control 30 responds to an emitter 32 indicating the speed of feed belt 17 and also to a position feedback transducer 33, including a grid element 34 that is connected to the lens support shuttle 31. The servo control 30 moves the lens 31 upon demand as documents pass aperture 13 in accordance with a stored program that precisely tracks the motion of the documents.

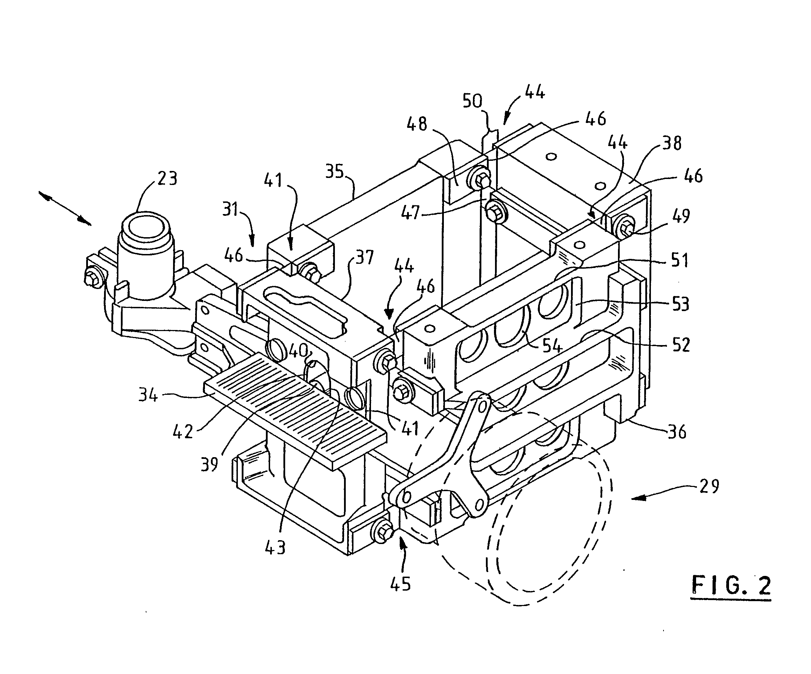

Details of the lens support shuttle 31 are shown in Fig. 2. The shuttle 31 is formed as a four-bar linkage, including parallel side arms 35 and 36, shuttle arm 37, and stationary frame part 38. A bumper rod 39 is mounted on frame part 38 and extends outwardly into an opening 40 in shuttle arm 37. Cutout plate 41 defines step edges 42 and 43 which can engage bumper rod 39 to limit motion of shuttle arm 37 in case of motor control failure.

The arms 35, 36 and 37 and the frame part 38 are interconnected to form a parallelogram by hinge means comprising upper and lower crossed leaf spring pairs 44, 45 respectively, each of which includes a first or outwardly directed leaf spring 46 and a second or laterally directed leaf spring 47, arranged at substantially right angles to the first leaf spring. Clamping plates 48, held in place by screw fasteners 49, secure the leaf springs 46 and 47 at their end to the members of the shuttle 31. A small free span 50 of each leaf spring 46 and 47 permits pivotal motion of the arms that is resisted by a relatively low spring rate. Translational or tensional motion of the arms 35, 36 and 37 is resisted by the column strength of the leaf springs 46 and 47. The arms 35, 36 and 37 are preferably relatively deep to provide vertical and torsional stiffness. That is to say, their dimension, parallel to the print axes of the vertical hinge means 44, 45, is similar in magnitude to the length of the arms between hinge means. The lens 23 is supported in a plane that is positioned substantially midway between the upper and lower leaf spring pins 44 and 45. Torsional stiffness of the shuttle 31 maintains the lens 23 in focus on the film 24. The arms 35, 36 and 37 are configured through the use of ribs such as 51 and 52, and cut-out portions such as 53 and 54, to have a high stiffness-to-mass ratio. The relatively stiff configuration of the arms, together with the constrained movement provided by the crossed leaf springs 46 and 47, produces an integrated moving body that inherently resists low frequency resonances of the type that tend to interfere with stable servo motor control. This is particularly important where the position tracking feedback for operating the servo motor control is directly connected with the lens being tracked, and thus is subject to the maximum combination of motions in the system. The resistance to resonant behaviour at low frequency is also particularly important in systems such as the microfilm camera 10 wherein a variety of mechanisms, for example the drive belt mechanisms, provide a number of vibrational frequency sources capable of stimulating resonant behaviour.

From the foregoing description it will be recognized that the shuttle configuration described provides for a minimum of spring rate and inertial load to be imposed upon the servo mechanism, and provides a directional stiffness by which interfering low frequency resonances are avoided.

## Claims

1. An image recording device for recording an image of a document on to a photosensitive surface during relative movement between the document and surface, wherein the image is projected on to the surface by a lens (23) moving in proportional synchronism with said relative movement, said lens being coupled to a stationary frame member (38) of the device by a parallelogram linkage system (31) and to drive means (29) to effect its movement along a path determined by the linkage system, characterised in that said linkage system comprises a rigid shuttle member (37) carrying the lens and hinged at its ends to a pair of rigid side members (35, 36) hinged to said frame member, each hinge between · two of the members comprising a first spring leaf (46) affixed to an end surface of the first member and to an inwardly facing surface of the second member and a second spring leaf (47) normal to the first leaf and affixed to an end surface of the second member and an inwardly facing surface of the first member.

2. An image recording device as claimed in claim 1, further characterised in that said linkage system is positioned for horizontal movement of the shuttle arm and each corner of the linkage system includes an upper and a lower one of said hinges.

3. An image recording device as claimed in claim 2, further characterised in that said lens is mounted on a plane between the planes of said upper and lower hinges.

4. An image recording device as claimed in any of the previous claims further characterised in that said drive means includes a motor controlled by a servo system (30) responsive to a sensor (33) responsive to movement of said shuttle arm.

5. An image recording device as claimed in any of the previous claims further characterised by a limiting member (39) extending from the stationary frame member to the shuttle arm and stop means (42, 43) positioned to engage the limiting member to limit movement of the shuttle member.

6. An image recording device as claimed in claim 5 further characterised in that said shuttle arm includes an aperture (40) into which the limiting member extends and said stop means comprise the sides of said aperture.

## Patentansprüche

1. Bildaufzeichnungsvorrichtung zur Aufzeichnung eines Bildes einer Vorlage auf einer lichtempfindlichen Fläche während einer Relativbewegung zwischen der Vorlage und der Fläche, wobei das Bild auf die Fläche durch eine Linse (23) projiziert wird, die sich in proportionaler Synchronität mit der Relativbewegung bewegt, wobei die Linse mit einem stationären Rahmenelement (38) der Vorrichtung durch ein Parallelogrammverbindungssystem (31) und mit Antriebsmitteln (29) zur Bewirkung ihrer Bewegung längs eines durch das Verbindungssystem bestimmten Weges verbunden ist, dadurch gekennzeichnet, daß das Verbindungssystem ein starres Pendelelement (37), welches die Linse trägt und an seinen Enden an einem Paar am Rahmenelement angelenkter starrer Seitenelemente (35, 36) angelenkt ist, umfaßt, wobei jedes Gelenk zwischen zwei der Elemente ein erstes Federblatt (46), welches an einer Endfläche des ersten Elements und an einer nach innen weisenden Fläche des zweiten Elements befestigt ist, und ein zweites Federblatt (47), welches zum ersten Federblatt normal und an einer Endfläche des zweiten Elements und an einer nach innen weisenden Fläche des ersten Elements befestigt ist, umfaßt.

2. Bildaufzeichnungsvorrichtung nach Anspruch 1, ferner dadurch gekennzeichnet, daß das Verbindungssystem für eine horizontale Bewegung des Pendelarms angeordnet ist und jede Ecke des Verbindungssystems ein oberes und ein unteres der Gelenke enthält.

3. Bildaufzeichnungsvorrichtung nach Anspruch 2, ferner dadurch gekennzeichnet, daß die Linse in einer Ebene zwischen den Ebenen der oberen und unteren Gelenke angebracht ist.

4. Bildaufzeichnungsvorrichtung nach irgendeinem der vorstehenden Ansprüche, ferner dadurch gekennzeichnet, daß die Antriebsmittel einen Motor enthalten, der durch ein Servosystem (30) gesteuert wird, das auf einen auf die Bewegung des Pendelarms ansprechenden Sensor (33) anspricht.

5. Bildaufzeichnungsvorrichtung nach irgendeinem der vorstehenden Ansprüche, ferner gekennzeichnet durch ein sich vom stationären Rahmenelement zum Pendelarm erstreckendes Begrenzungselement (39) und Anschlagmittel (42, 43), die am Begrenzungselement die Bewegung des Pendelelements begrenzend angreifend angeordnet sind.

6. Bildaufzeichnungsvorrichtung nach Anspruch 5, ferner dadurch gekennzeichnet, daß der Pendelarm eine Öffnung (40) enthält, in welche sich das Begrenzungselement erstreckt, und daß die Anschlagmittel die Seiten der Öffnung umfassen.

**Revendications**

1. Un dispositif d'enregistrement d'images destiné à enregistrer une image d'un document sur une surface photosensible pendant un déplacement relatif entre le document et la surface, dans lequel l'image est projetée sur la surface par un objectif (23) qui se déplace en synchronisme proportionnel avec ledit mouvement relatif, ledit objectif étant couplé à un élément de châssis fixe (38) du dispositif par un système de tringlerie à parallélogramme (31) et à des moyens d'entraînement (29) destinés à déterminer son mouvement le long d'un trajet défini par le système de tringlerie, caractérisé en ce que ledit système de tringlerie comprend un élément formant navette rigide (37) qui porte l'objectif et est articulé à ses extrémités sur une paire d'éléments latéraux rigides (35, 36), eux-mêmes articulés sur ledit élément de châssis, chaque articulation entre deux des éléments comprenant une première lame de ressort (46) fixée à une surface terminale du premier élément et à une surface du deuxième élément qui est dirigée vers l'intérieur et une deuxième lame de ressort (47) perpendiculaire à la première lame et fixée à une surface terminale du deuxième élément et à une surface du premier élément qui est dirigée vers l'intérieur.

2. Un dispositif d'enregistrement d'images comme revendiqué dans la revendication 1, caractérisé en outre en ce que ledit système de tringlerie est positionné pour assurer un déplacement horizontal du bras porte-navette et en ce que chaque angle du système de tringlerie comprend une articulation supérieure et une articulation inférieure desdites articulations.

3. Un dispositif d'enregistrement d'images comme revendiqué dans la revendication 2, caractérisé en outre en ce que ledit objectif est monté sur un plan compris entre les plans desdites articulations supérieures et inférieures.

4. Un dispositif d'enregistrement d'images comme revendiqué dans l'une quelconque des revendications précédentes, caractérisé en ce que lesdits moyens d'entraînement comprennent un moteur commandé par un servo-dispositif (30) qui répond à un capteur (33) sensible lui-même au mouvement dudit bras porte-navette.

5. Un dispositif d'enregistrement d'images comme revendiqué dans l'une quelconque des revendications précédentes, caractérisé en outre par un élément limiteur (39) qui s'étend de l'élément stationnaire du châssis au bras porte-navette et des moyens de butée (42, 43) positionnés pour attaquer l'élément limiteur de manière à limiter le mouvement de l'élément formant navette.

6. Dispositif d'enregistrement d'images comme revendiqué dans la revendication 5, caractérisé en ce que ledit bras porte-navette comprend une ouverture (40), dans laquelle ledit élément limiteur est engagé et lesdits moyens de butée comprennent le côtés de ladite ouverture.

FIG. 1

FIG. 2

0 060 398